# EUROPEAN PATENT APPLICATION

(11) **EP 2 280 304 A2**
(43) Date of publication of application: **02.02.2011**
(21) Application number: 10165291.5
(22) Date of filing: 08.06.2010
(51) Int. Cl.: G02F 1/13363, G02F 1/1335

(54) **Liquid crystal display device having an optically anisotropic film**

(30) Priority: 08.07.2009 JP 2009161321
(71) Applicant: Hitachi Displays, Ltd., Mobara-shi Chiba (JP)
(72) Inventor: Tanaka, Jun, Tokyo 100-8220 (JP); Otani, Miharu, Tokyo 100-8220 (JP); Adachi, Masaya, Tokyo 100-8220 (JP); Hiratsuka, Takato, Tokyo 100-8220 (JP)
(74) Representative: Beetz & Partner

(57) **Abstract**

A liquid crystal display device includes a liquid crystal panel having a first substrate (101) on which drain lines and gate lines are formed, the gate lines crossing the drain lines and the region surrounded by the drain lines and the gate lines serves as pixel region. A second substrate (103) is arranged opposite to the first substrate (101) and an optical anisotropic film (104) is formed on the sides of the first substrate (101) and the second substrate (103), which are not in contact with the liquid crystal between the substrates. The optical anisotropic film (104) is formed of molecules which chemically bond to the first substrate (101) and the second substrate (103) in an aligned state; said optical anisotropic film includes a glass surface treatment layer (202) and an optical anisotropic coated film (201). The device has a backlight side (204) and may have a protective film (401) formed on the viewer side.

## Description

### BACKGROUND OF THE INVENTION

### 1. Field of the Invention

The present invention relates to a liquid crystal display device, in particular, a liquid crystal display device having an optical anisotropic coated film made from a coating material containing a dichroic dye exhibiting lyotropic liquid crystallinity as a substitution for an optical anisotropic film used in a liquid crystal display device.

### 2. Description of the Related Art

Liquid crystal display devices have such advantages as being thinner, requiring a smaller space, being lighter in weight, and consuming less electricity, and are finding wider applications in display devices of various electronic instruments such as televisions, computers, mobile phones, small portable instruments, and in-vehicle instruments. At present, thinner liquid crystal display devices are strongly demanded particularly for mobile phones and small portable instruments.

A liquid crystal display device is formed of a combination of a liquid crystal cell in which a liquid crystal is interposed between a pair of light transmissive substrates, optical anisotropic films placed on both outer sides of the liquid crystal cell, and a backlight serving as a light source. Of the optical anisotropic films, a polarizer film serves as an optical filter taking polarized light out of the backlight, and hence is an important member inf luencing the display quality of the liquid crystal display device. A polarizer film generally has a configuration in which a uniaxially stretched polyvinyl alcohol resin film is used as a substrate, iodine or a dichroic dye exhibiting optical anisotropy is caused to adsorb onto a surface of the resin film, followed by alignment of iodine or the dichroic dye, and protective film substrates (triacetyl cellulose) are further bonded on both surfaces of the resin film.

The optical anisotropic film as described above includes a film substrate having a thickness of as large as a hundred to several hundreds µm, which is a cause for inhibiting a reduction in thickness of the liquid crystal display device.

In order to solve the problem, there is disclosed a technology that uses a coated film in which the molecules of a dichroic dye are aligned for controlling the expression of an optical anisotropic function. Japanese Patent Application Laid-open No. Hei 3-54506 proposes an optical anisotropic film in which a substrate is subjected to a rubbing treatment and then to a corona treatment, and a dichroic dye is coated on the resultant substrate, followed by the alignment of the molecules of the dichroic dye in the rubbing direction. Japanese Patent Application Laid-open No. 2002-180052 and Japanese Patent Application Laid-open No. 2002-277636 each propose an optical anisotropic film in which a dichroic dye exhibiting lyotropic liquid crystallinity is coated while a shearing force is being applied, to thereby cause the alignment of the molecules of the dichroic dye.

### SUMMARY OF THE INVENTION

Japan Electronics and Information Technology Industries Association (JEITA) has established standards with respect to liquid crystal display devices, and has established various test items (Standard Number: ED-2531B, Title of Standard: Environmental test methods for Liquid Crystal Display devices). The tests include a constant-temperature test defining a standard for temperature conditions as an example, and liquid crystal display devices are required to offer reliability by meeting the standards without any problem.

In a dichroic dye exhibiting different types of anisotropy in the major axis direction and the minor axis direction of the dye molecule with respect to light absorption, dye molecules assemble into a liquid crystal state (lyotropic liquid crystallinity) in which the dye molecules are regularly aligned in the presence of a solvent under a given concentration, given solvent composition, and given temperature condition, to form a solution. By using the dichroic dye as described above, a coated film in which dye molecules are regularly aligned in a given direction is formed from a solution, and the coated film then expresses optical anisotropy.

Regarding the case described above, there is known a technology in which a rubbing treatment that generally causes the alignment of a liquid crystal is provided on a surface of a substrate on which a coated film is formed, leading to the expression of a controlling force on the alignment, to thereby provide a coated film in which dye molecules are aligned on the surface of the substrate. In addition, there is known a technology in which a dichroic dye solution exhibiting lyotropic liquid crystallinity is coated while a shearing force is being applied, thereby providing a coated film in which a liquid crystal alignment state is attained without any rubbing treatment, leading to the expression of a controlling force on the alignment, and resulting in the alignment of the molecules of the dichroic dye.

Those conventional technologies do not contribute to maintaining the alignment of the molecules of the dichroic dye, for example, under an environment in which temperature is retained from 85°C to 100°C, because in an alignment state in a dichroic dye-coated film in which optical anisotropy is expressed, dichroic dye molecules are just arranged so that the major axis direction of the molecule is parallel to the surface of a substrate and the minor axis of the molecule is vertical to the surface of the substrate, and the chemical bonding force of the molecules with a foundation layer is not strong at the molecular level. Thus, there is the following problem. That is, the arrangement of the dye molecules is disrupted, leading to time-dependent deterioration of the optical anisotropic characteristic, which significantly influences the display performance of a liquid crystal display device.

An object of the present invention is to provide a liquid crystal display device which has an optical anisotropic coated film made from a coating material containing a dichroic dye exhibiting lyotropic liquid crystallinity particularly as a substitution for an optical anisotropic film, and which offers increased reliability by strengthening the alignment of the molecules of the dichroic dye in the optical anisotropic coated film.

To solve the problem described above, the present invention provides a liquid crystal display device, including a liquid crystal panel, the liquid crystal panel including: a first substrate on which a plurality of drain lines and a plurality of gate lines are formed, the plurality of gate lines crossing the plurality of drain lines; a second substrate which is arranged opposite to the first substrate via a liquid crystal; and an optical anisotropic film formed on a side of one of the first substrate and the second substrate, the side not being in contact with the liquid crystal; in which a region surrounded by the plurality of drain lines and the plurality of gate lines serves as a pixel region, in which the optical anisotropic film is formed of molecules which chemically bond to one of the first substrate and the second substrate in an aligned state.

In the present invention, it is possible to provide a liquid crystal display device which has an optical anisotropic coated film made from a coating material containing a dichroic dye exhibiting lyotropic liquid crystallinity as a substitution for an optical anisotropic film, and which offers established reliability by strengthening the alignment of the molecules of the dichroic dye in the optical anisotropic coated film.

### BRIEF DESCRIPTION OF THE DRAWINGS

In the accompanying drawings:
FIG. 1 is a perspective view for illustrating a schematic configuration of a liquid crystal display device of Embodiment 1 of the present invention;
FIG. 2 is a cross-sectional view taken along the cross-section II-II illustrated in FIG. 1;
FIG. 3 is a view for illustrating a chemical reaction during formation of an optical anisotropic coated film of Embodiment 1 of the present invention;
FIG. 4 is a perspective view for illustrating a schematic configuration of a liquid crystal display device of Embodiment 2 of the present invention; and
FIG. 5 is a cross-sectional view taken along the cross-section V-V illustrated in FIG. 4.

### DETAILED DESCRIPTION OF THE INVENTION

Hereinafter, embodiments to which the present invention was applied are described by using the drawings. It should be noted that in the following description, the same component is given the same symbol to omit repetitive description.

### [Embodiment 1]

### (Whole configuration)

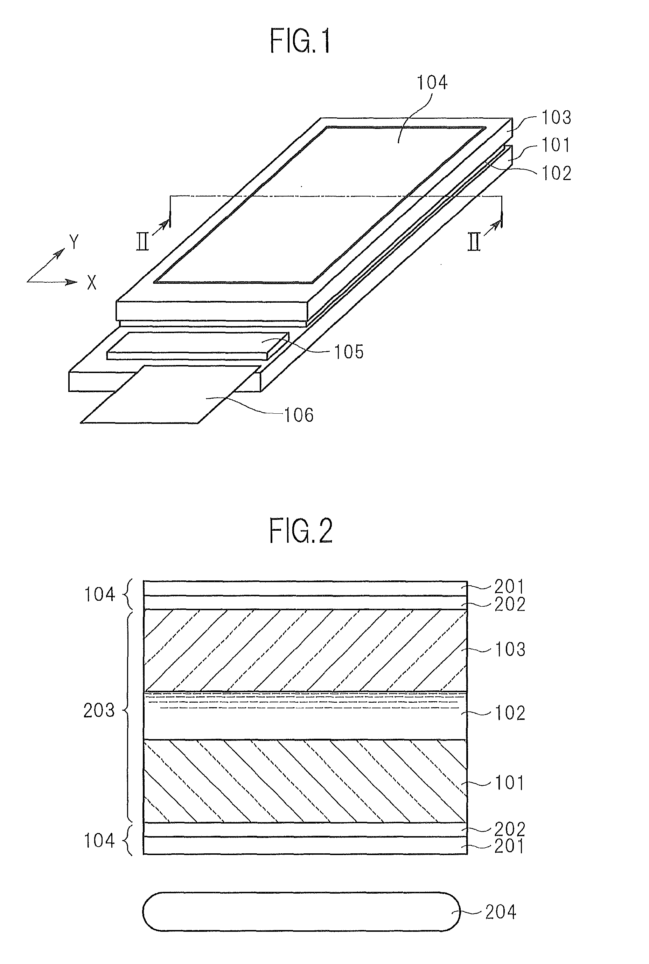

FIG. 1 is a perspective view for illustrating a schematic configuration of the liquid crystal display device of Embodiment 1 of the present invention. It should be noted that X and Y in the figure represent the X direction and the Y direction, respectively.

As illustrated in FIG. 1, the liquid crystal display device of Embodiment 1 has a liquid crystal display panel which is formed of a first substrate (thin-film transistor circuit substrate) 101 on which a pixel electrode and the like are formed, a second substrate (color filter substrate) 103 on which a color filter and a black matrix (light shielding film) are formed and which is arranged opposite to the first substrate 101, and a liquid crystal (liquid crystal layer) 102 interposed between the first substrate 101 and the second substrate 103, and the liquid crystal display device is formed by combining the liquid crystal display panel with a backlight unit serving as a light source and not being illustrated. The liquid crystal display device has a particular configuration in which an optical anisotropic thin film 104 (the lower surface of the film is not illustrated) according to the invention of the present application is formed on the outer surface side of each of the first substrate 101 and the second substrate 103, that is, on each outer side of the liquid crystal display panel. Further, the liquid crystal display device has a configuration in which a sealing material formed around a display region and not illustrated is used to fix (bond) the first substrate 101 and the second substrate 103 and seal the liquid crystal 102 interposed between the two substrates 101 and 103. It should be noted that in the following description, even if the liquid crystal display panel is mentioned, the liquid crystal display device is used to refer to the liquid crystal display panel. Meanwhile, the optical anisotropic thin film 104 of Embodiment 1 is described later in detail. Further, it is suitable to use a known alkali-free glass having good transparency in the visible light region as the first substrate 101 and the second substrate 103, but any other known glass substrate may be used.

Further, the liquid crystal display device of Embodiment 1 has a conf iguration in which circuits that drive a pixel, the circuits including a scanning signal driving circuit (gate driver) and an image signal driving circuit (drain driver), are provided on a liquid crystal display-controlling IC 105 formed on the first substrate 101. The liquid crystal display-controlling IC 105 has a configuration in which a signal for displaying an image, a signal for controlling that signal, and the like sent from an exterior device are input via a printed wiring substrate 106.

Further, the liquid crystal display device of Embodiment 1 illustrated in FIG. 1 is provided, in the liquid crystal side surface and display region of the first substrate 101, with scanning signal lines (gate lines) not illustrated, the scanning signal lines extending in the X direction and being arranged in parallel to the Y direction in the figure. Besides, the liquid crystal display device is provided with image signal lines (drain lines) not illustrated, the image signal lines extending in the Y direction and being arranged in parallel to the X direction in the figure.

The region surrounded by two adjacent drain lines and two adjacent gate lines forms a region where a pixel is formed, and hence each pixel forms a matrix-shape arrangement in a display region. Each pixel is provided with, for example, a thin-film transistor, a pixel electrode, and a common electrode, the thin-film transistor being allowed to be in the state of "on" by a scanning signal supplied from the gate line, the pixel electrode being supplied with an image signal from the drain line via the thin-film transistor in the state of "on", and the common electrode being connected to a common line and being supplied with a standard signal having an electric potential serving as a standard electric potential with respect to the electric potential of the image signal. Between the pixel electrode and the common electrode, an electric field having a component parallel to the surface of the first substrate 101 is generated so that the electric field drives the molecules of a liquid crystal. The liquid crystal display device as described above is known to be capable of providing so-called wide-viewing-angle display, and is named an IPS mode or a horizontal electric field mode because of the specificity of applying an electric field to a liquid crystal. It should be noted that in addition to the above-mentioned IPS mode (In-Plane-Switching mode), a Twisted Nematic mode, a Vertical Alignment mode, or the like is known as a method of displaying the driving of a liquid crystal, and a method of displaying the driving of a liquid crystal cell is not particularly limited in the present invention.

Further, the liquid crystal display device has a configuration in which each drain line and each gate line are extended beyond the sealingmaterial at the end portion of each line, and are connected to the liquid crystal display-controlling IC 105.

### (Detailed configuration of optical anisotropic thin film)

Subsequently, FIG. 2 illustrates a cross-sectional view taken along the cross-section II-II illustrated in FIG. 1. Hereinafter, the optical anisotropic thin film of Embodiment 1 of the present invention is described in detail based on FIG. 2. It should be noted that because the liquid crystal display device of Embodiment 1 has the same configuration as that of conventional liquid crystal display devices except for the configuration of the optical anisotropic thin film, the configuration of the optical anisotropic thin film is described in detail in the following description. In addition, a liquid crystal display panel portion located at the facing surface side including the first substrate 101 and the second substrate 103 is suitably referred to as a liquid crystal cell 203 in the following description.

As evident from FIG. 2, the liquid crystal display device of Embodiment 1 has a configuration in which, on the backlight 204 side (lower surface side in FIG. 2) of the liquid crystal cell 203, that is, on the outer surface of the first substrate 101, an optical anisotropic thin film 104 is formed, the optical anisotropic thin film including a glass surface treatment layer 202 which is located closer to the first substrate 101 and an optical anisotropic coated film 201. In addition, the liquid crystal display device of Embodiment 1 has a configuration in which, on the viewer side (upper surface side in FIG. 2) of the liquid crystal cell 203, that is, on the outer surface of the second substrate 103, the same optical anisotropic thin film 104 is formed, the optical anisotropic thin film including a glass surface treatment layer 202 which is located closer to the first substrate 101 and an optical anisotropic coated film 201. In this case, the liquid crystal display device has a configuration in which each set of the optical anisotropic coated film 201 of Embodiment 1 and the glass surface treatment layer 202 is formed directly on the first substrate 101 and on the second substrate 103.

As a result of the configuration described above, in the liquid crystal display device of Embodiment 1, light from the backlight 204 side passes through the optical anisotropic coated film (optical anisotropic coated film on the first substrate 101) 201 on the backlight 204 side, and the light then has optical anisotropy. Next, the light passes through the liquid crystal cell 203, and then the component of the light passing through the optical anisotropic coated film (optical anisotropic coated film on the second substrate 103) on the outer side of the liquid crystal cell 203 is taken outside the liquid crystal display device (viewer side) by the optical shutter function of a liquid crystal driven by a thin-film transistor, and the component of the light is visually observed as a display image by a viewer.

In this case, the liquid crystal display device of Embodiment 1 has a configuration in which a coatingmaterial containing a dichroic dye having lyotropic liquid crystallinity is used for forming the optical anisotropic coated film 201. It should be noted that compared with the case where an optical anisotropic thin film including a dichroic dye is formed on the facing surface sides (sides of a liquid crystal) of the first substrate and second substrate as done in conventional liquid crystal display devices, the optical anisotropic coated film 201 is more exposed to ambient air or the like in the case where the optical anisotropic coated film 201 is formed on the outer surface as done in the liquid crystal display device of Embodiment 1. Thus, the optical anisotropic coated film 201 needs to be formed in the manner described below.

Here, in the state where molecules are arranged in a coated film formed on a substrate, it is generally considered that the molecular arrangement is influenced by the interaction between the molecules and the substrate, the interaction between the molecules, and the interaction between molecular layers in the coated film. When the molecules in the above-mentioned case are the molecules of a dichroic dye exhibiting lyotropic liquid crystallinity, the molecules are aligned in a liquid crystal state, and the interaction between the molecules and the interaction between the molecular layers function more strongly than the interaction between the molecules and the substrate does.

In a conventional coated film including a dichroic dye formed on the facing surface sides of the first substrate and second substrate, a chemical bonding force contributing to the interaction between dye molecules and a foundation layer is not strong. Thus, under an environment in which a high temperature is retained, the arrangement of the molecules of the dichroic dye is relaxed and disrupted, resulting in prompt deterioration of the optical anisotropic characteristic. Thus, the optical anisotropic coated film 201 of Embodiment 1 is formed using a coating material containing a dichroic dye in an aligned state via the glass surface treatment layer 202 which serves as a foundation layer, resulting in strong bonding between the first substrate 101 and the optical anisotropic thin film 104 and between the second substrate 103 and the optical anisotropic thin film 104.

### (Configuration of optical anisotropic coated film)

Hereinafter, the configuration of the optical anisotropic coated film 201 of Embodiment 1 of the present invention and the configuration of the glass surface treatment layer 202 are described in detail. In the present invention, the optical anisotropic coated film 201 has a thickness of desirably 50 nm or more and 700 nm or less, or particularly desirably 100 nm or more and 500 nm or less. This is because if the optical anisotropic coated film 201 is thinner, the concentration of dye molecules in the film thickness direction is lower, and hence optical anisotropy is not sufficient, and if the optical anisotropic coated film 201 is thicker, absolute film transmittance becomes smaller, and hence light transmittance and luminance decline as a liquid crystal display device, resulting in inferior visibility as the liquid crystal display device.

Used as the dichroic dye to be used in the present invention is a compound that has an aromatic ring or a heterocyclic ring as a basic molecular skeleton structure, the skeleton structure being bonded with a carboxyl group, a sulfonic acid group, or an amino group as a substituent. Examples of the basic molecular skeleton structure of the dichroic dye to be used in the present invention include azo, anthraquinone, stilbene, pyrazolone, perylene, naphthalimide, triphenylmethane, and quinoline structures. Specific examples of the dichroic dye include, but are not limited to, the compounds described below.

Specific examples of the dichroic dye having carboxyl groups in its molecular structure include the compounds represented by the following chemical formula (1) and chemical formula (2).

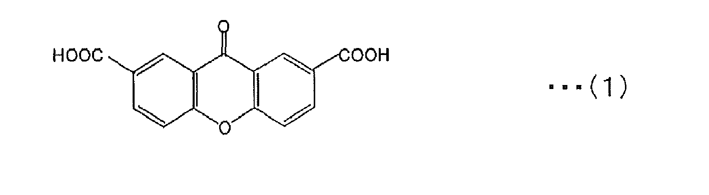

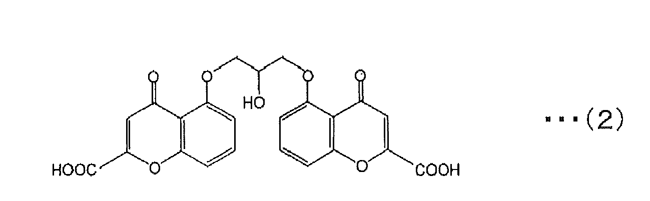

Specific examples of the dichroic dye being applicable to the invention of the present application and having sulfonic acid groups in its molecular structure include C.I.Direct Orange 26, C.I.Direct Red 23, C.I.Direct Red 3, C.I.Direct Red 79, C.I.Direct Yellow 44, C.I.Direct Blue 86, C.I.Direct Blue 67, C.I .Direct Blue 168, C.I.Acid Yellow 38, C.I.Direct Red 18, C.I.Acid Blue 113, C.I.Acid Green 25, C.I.Acid Black 26, C.I.Reactive Red 43, C.I.Reactive Blue 2, C.I.Direct Yellow 50, C.I.Acid Yellow 17, C.I.Mordant Red 7, C.I.Mordant Blue 13, C.I.Direct Yellow 11, C.I.Direct Red 81, C.I.Direct Violet 51, and C.I.Direct Brown 106.

Specific examples of the dichroic dye having sulfonic acid groups and carboxyl groups in its molecular structure include C.I.Mordant Yellow 3 and C.I.Acid Green 59.

Further, specific examples of the dichroic dye having sulfonic acid groups and amino groups in its molecular structure include C.I.Acid Black 19, C.I.Acid Red 37, C.I.Reactive Blue 19, C.I.Reactive Black 5, C.I.Reactive Blue 5, C.I.Reactive Blue 4, C.I.Reactive Blue 2, C.I.Direct Green 59, C.I.Reactive Orange 13, C.I.Direct Black 17, C.I.Direct Blue 71, and C.I.Direct Blue 15.

Further, a specific example of the dichroic dye having amino groups in its molecular structure includes C.I.Pigment Red 177.

In particular, in the invention of the present application, at least one kind of the above-mentioned dichroic dye is selected to prepare an aqueous solution or a mixed solution with water and an organic solvent. The solid content concentration of the dye in the solution is arbitrarily selected depending on the kind of the dye used as long as a liquid crystal phase is formed in the solution.

It should be noted that when the solution is formed into a coated film, it is desirable to adopt a method of coating a solution while a shearing force is being applied, the method being called a slit coat method. The method provides a coated film in which dichroic dye molecules are regularly aligned. It should be noted that the method of coating the solution is not limited to the slit coat method.

Further, in the present invention, provided is the glass surface treatment layer 202 being formed by chemically modifying the surfaces of the first substrate 101 and second substrate 103 and serving as a foundation, and hence, an optical anisotropic film is formed as a coated film of a dichroic dye having a carboxyl group or a sulfonic acid group as a functional group in its molecular structure, with respect to the first substrate 101 and second substrate 103 each having an amino group terminal. Meanwhile, an optical anisotropic film is formed as a coated film of a dichroic dye having an amino group as a functional group in its molecular structure, with respect to the first substrate 101 and second substrate 103 each having a carboxyl group terminal or an epoxy group terminal.

### (Configuration of glass surface treatment layer)

Hereinafter, the glass surface treatment layer 202 formed by chemically modifying the surfaces of the first substrate 101 and second substrate 103 is described in detail based on FIG. 2.

In the case where the surface of the first substrate 101 on the backlight side and the surface of the second substrate 103 on the viewer side are chemically modified to form a carboxyl group terminal, an epoxy group terminal, or an amino group terminal, it is suitable to use an organosilicon compound having a carboxyl group, an epoxy group, or an amino group at its terminal for chemically modifying the surfaces of the first substrate and second substrate which are glass substrates.

This is because when a glass surface is chemically modified, the molecules of the organosilicon compound adsorb onto and cover the surface of the substrate, a terminal of each molecule chemically reacts with the surface of the substrate until possible reaction sites in the surface of the substrate are completely reacted, and any further reaction does not progress. In this case, the surface of the glass substrate is covered with carboxyl groups, epoxy groups, or amino groups of the molecules of the organosilicon compound, each of the groups being present at the terminal opposed to the terminal that chemically reacts.

To be more specific, after foreign substances and contaminating components on the surface of the glass substrate are removed by washing using water, analcohol, or the like, the surface is irradiated with ultraviolet rays or is exposed to an oxygen plasma atmosphere, resulting in the production of hydroxyl groups in the surface of the glass substrate. In the case where the above-mentioned organosilicon is an organosilicon having an alkoxysilane group or an alkylsilane group at its terminal, the alkoxysilane group or the alkylsilane group reacts with a hydroxyl group in the surface of the glass substrate, and then the reaction is promoted by heat treatment, resulting in the formation of the bond (Si-O-Si).

Specific examples of the organosilicon having a carboxyl group terminal include 7-carboxy-heptyltriethoxysilane and 5-carboxy-pentyltriethoxysilane. Further, specific examples of the organosilicon having an epoxy group terminal include 3-glycidyloxypropyl(dimethoxy)methylsilane, 3-glycidyloxypropyltrimethoxysilane, and diethoxy(3-glycidyloxypropyl)methylsilane. Further, specific examples of the organosilicon having an amino group terminal include 3-(2-aminoethylamino)propyldimethoxymethylsilane, 3-(2-aminoethylamino)propyltriethoxysilane, 3-(2-aminoethylamino)propyltrimethoxysilane, 3-aminopropyldimethoxymethylsilane, 3-aminopropyltriethoxysilane, 3-aminopropyltrimethoxysilane, and p-aminophenyltrimethoxysilane. However, examples are not limited thereto.

As described above, the above-mentioned coating method is used to coat a dichroic dye having carboxyl groups and sulfonic acid groups as functional groups in its molecular structure, or a dichroic dye in which many carboxyl groups and many sulfonic acid groups are present as functional groups in its molecule though amino groups are also present, on the surface of a transparent substrate having amino group terminals, thereby forming a coated film in which dye molecules are arranged regularly. After that, heat treatment is performed to cause a reaction in the interface between the dye-coated film and the glass substrate, the reaction being a reaction between an alkaline group such as an amino group present in the surface of the glass substrate and an acidic group such as a carboxyl group or a sulfonic acid group present in the dye molecule, with the result that dichroic dye molecules in an aligned state are bound and fixed to the glass substrate. The dye molecule-coated film obtained through the fixed alignment in the interface can be provided with the effects that the relaxation of alignment taking place afterward under an environment in which temperature is retained is suppressed, the arrangement of the dye molecules is not disrupted, and its optical anisotropic characteristic can be retained.

Further, when a coated film of a dichroic dye having an amino group as a functional group in its molecular structure is formed on the surfaces of the substrates having carboxyl group terminals and epoxy group terminals and serving as a foundation, the surfaces of the substrates being formed by chemically modifying the surfaces of the first substrate 101 and second substrate 103, a reaction is carried out in the same manner as described above, the reaction being a reaction between an acidic group such as a carboxyl group or a sulfonic acid group present in the surface of the glass substrate and an alkaline group such as an amino group present in the dye molecule, and that is, in the interface between the dye-coated film and the glass substrate, a carboxyl group terminal or epoxy group terminal in the surfaces of the substrates reacts with an amino group in the dye molecule, with the result that the interface is provided with the effect that dichroic dye molecules in an aligned state bond with and are fixed to the glass substrate.

As described above, the liquid crystal display device of

Embodiment 1 of the present invention includes the first substrate on which a thin-film transistor and the like are formed, the transistor controlling the writing of electric charge into pixels arranged in a matrix shape and the second substrate on which a color filter, a black matrix, and the like are formed and which is arranged on the opposite side of the first substrate 101, and when the optical anisotropic coated film made from a coating material containing a dichroic dye having lyotropic liquid crystallinity is formed on the outer side surfaces of the first substrate and second substrate, the outer side surfaces each being located on the sides opposed to those of the facing surfaces of the first substrate and second substrate, the liquid crystal display device has a configuration in which the glass surface treatment layer for bonding the interface between a dye molecule layer as the lower layer of the optical anisotropic coated film where the molecules of the dichroic dye are regularly arranged and the first substrate and second substrate is formed, and hence, the bonding between the first and second substrates and the optical anisotropic coated film can be strengthened, and the bonding acts as an alignment-controlling force, with the result that the bonding functions on the whole optical anisotropic coated film which includes the dye molecule layer as the lower layer and the dichroic dye molecule layer laminated on the dye molecule layer, enabling the strong retention of the alignment of the dichroic dye-coated film.

Further, the liquid crystal display device of Embodiment 1 of the present invention has a configuration in which the optical anisotropic thin film including the optical anisotropic coated film and the glass surface treatment layer is formed directly on the first substrate and on the second substrate, and hence, it is possible to realize further reduction in thickness and further reduction in weight in the liquid crystal display device of Embodiment 1 of the present invention, compared with conventional liquid crystal display devices using an optical anisotropic film.

In addition, because the optical anisotropic thin film can be formed during the manufacturing process of the liquid crystal display device, the manufacturing cost of the liquid crystal display device can be reduced.

Hereinafter, examples of the liquid crystal display device of Embodiment 1 of the present invention are described.

### [Example 1]

The liquid crystal display device of Example 1 of the present invention was produced under the following conditions. The production method for the device is described using FIG. 1 and FIG. 2.

The liquid crystal display device in Example 1 is a device obtained by forming, as an optical anisotropic thin film 104, an optical anisotropic coated film 201 made from a coating material containing a dichroic dye exhibiting lyotropic liquid crystallinity and being represented by the following chemical formula (3).

A mixed solution of pure water and ethanol (mixed ratio is 8 to 2) having a dye solid content concentration of 18% by weight was prepared.

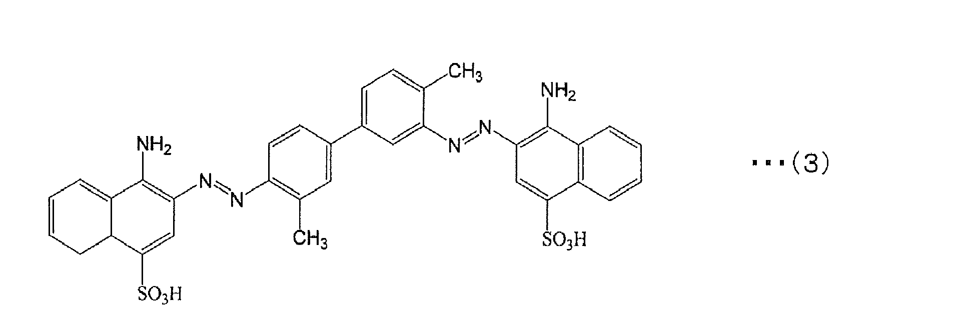

An organosilicon compound was used to perform a surface treatment on an outer surface of each of glass substrates of a liquid crystal cell 203. Here, with respect to the dye represented by the chemical formula (3), 3-aminopropyltrimethoxysilane was used as the organosilicon compound so that the surfaces of the glass substrates (first substrate and second substrate) were covered with amino group terminals.

For the formation of an optical anisotropic thin film 104, the outer surface of one of the glass substrates (for example, first substrate 101) in a liquid crystal cell 203 was first washed with acetone to remove organic components attached, and an excimer ultraviolet lamp (wavelength 193 nm) was then used to perform light irradiation cleaning.

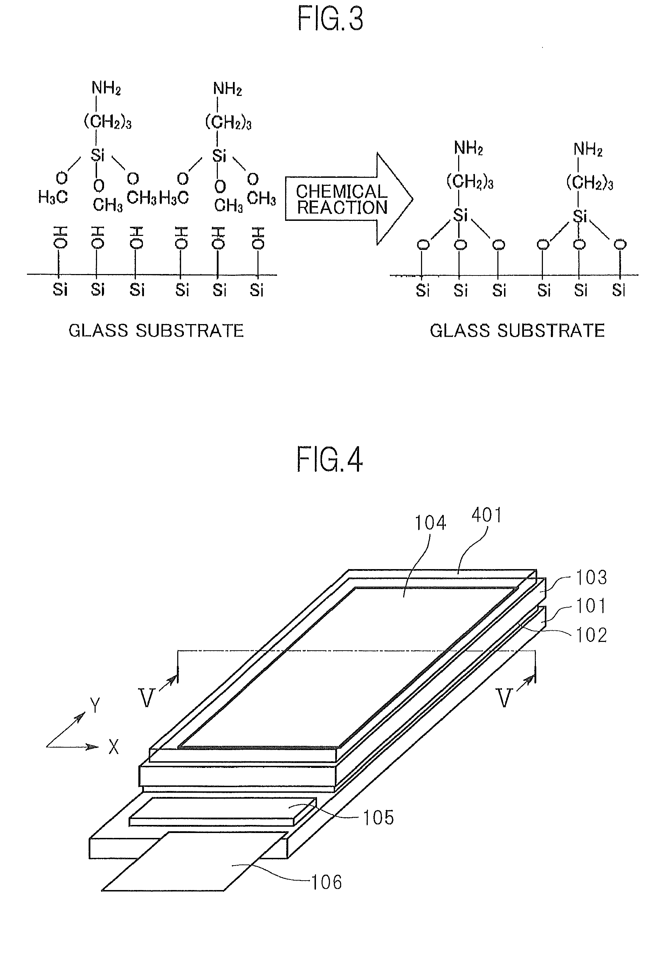

Next, 3-aminopropyltrimethoxysilane was coated on the surface of the glass substrate, and an oven furnace was then used to perform a heat treatment with hot air at 120°C for 30 minutes. Subsequently, after isopropyl alcohol was used to wash the surface of the glass substrate, drying by heating at 80°C for 10 minutes was performed in the oven furnace. A series of those steps caused the chemical reaction illustrated in FIG. 3, forming a treatment layer having a glass substrate surface covered with amino group terminals.

Next, the same treatment steps were performed on the outer surface of the other glass substrate (for example, second substrate 103) in the liquid crystal cell 203. This resulted in the formation of glass surface treatment layers 202, which are the outer surfaces of both glass substrates covered with amino group terminals in the liquid crystal cell 203.

Next, on one of the glass surface treatment layers 202 in the liquid crystal cell 203, a solution containing the dye represented by the chemical formula (3) was coated by a coating device using a slit coat method while a shearing force was being applied, forming a coated film having a thickness of 300 nm in which dye molecules are in a regularly aligned state.

Next, the resultant coated film was subjected to a heat treatment at 100°C for 20 minutes in the oven furnace, and as a result, a sulfonic acid group in the dye represented by the chemical formula (3) bonded with an amino group in the surface of the glass substrate, thereby fixing the coated film to the foundation layer. Subsequently, the same treatment steps were performed on the outer surface of the other glass substrate in the liquid crystal cell.

Performing a series of those steps resulted in forming the glass surface treatment layers 202 on both outer surfaces of the liquid crystal cell 203, and resulted in forming the optical anisotropic coated films 201 including the dye represented by the chemical formula (3) on the surfaces of the glass surface treatment layers 202.

The resultant liquid crystal cell 203 as described above was used to produce the liquid crystal display device illustrated in FIG. 1. In the liquid crystal display device thus produced, the interfacial bonding between a dye molecule layer as the lower layer of the optical anisotropic coated film where the molecules of the dichroic dye are regularly arranged and the surfaces of the liquid crystal cell glass substrates (first substrate and second substrate) is strengthened, and as a result, the bonding acts as an alignment-controlling force, and functions on the whole dichroic dye molecule layer laminated on the dye molecule layer as the lower layer, enabling the strong retention of the alignment of the dichroic dye-coated film serving as the optical anisotropic coated film 201.

### [Example 2]

An optical anisotropic thin film 104 was formed in Example 2 of the present invention in the same conditions as those in Example 1, except that the dye having sulfonic acid groups and being represented by the chemical formula (4) was used in place of the dye represented by the chemical formula (3) in Example 1, and then a liquid crystal display device was produced.

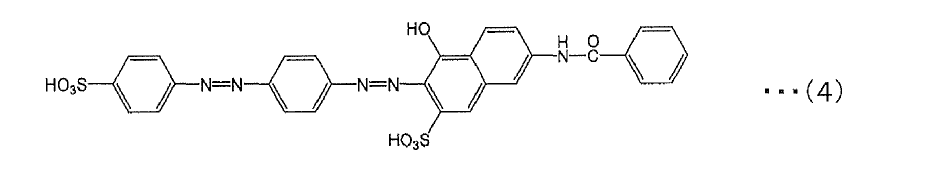

In the liquid crystal display device provided with the optical anisotropic thin film 104 formed as described above, the interfacial bonding between a dye molecule layer as the lower layer of an optical anisotropic coated film 201 where the molecules of dichroic dyes are regularly arranged and the surfaces of liquid crystal cell glass substrates (first substrate and second substrate) is strengthened, and as a result, the bonding acts as an alignment-controlling force, and functions on the whole dichroic dye molecule layer laminated on the dye molecule layer as the lower layer, enabling the strong retention of the alignment of the dichroic dye-coated film serving as the optical anisotropic coated film 201.

### [Example 3]

An optical anisotropic thin film 104 was formed in Example 3 of the present invention in the same conditions as those in Example 1, except that the dye having carboxyl groups and being represented by the chemical formula (2) was used in place of the dye represented by the chemical formula (3) in Example 1, and then a liquid crystal display device was produced.

In the liquid crystal display device provided with the optical anisotropic thin film 104 formed as described above, the interfacial bonding between a dye molecule layer as the lower layer of an optical anisotropic coated film where the molecules of dichroic dyes are regularly arranged and the surfaces of liquid crystal cell glass substrates (first substrate and second substrate) is strengthened, and as a result, the bonding acts as an alignment-controlling force, and functions on the whole dichroic dye molecule layer laminated on the dye molecule layer as the lower layer, enabling the strong retention of the alignment of the dichroic dye-coated film serving as the optical anisotropic coated film 201.

### [Example 4]

In Example 4 of the present invention, the dye having many amino group terminals and being represented by the chemical formula (5) was used to form an optical anisotropic thin film, and then a liquid crystal display device was produced. In Example 4, a mixed solution of pure water and ethanol (mixed ratio is 8 to 2) having a dye solid content concentration of 18% by weight was prepared.

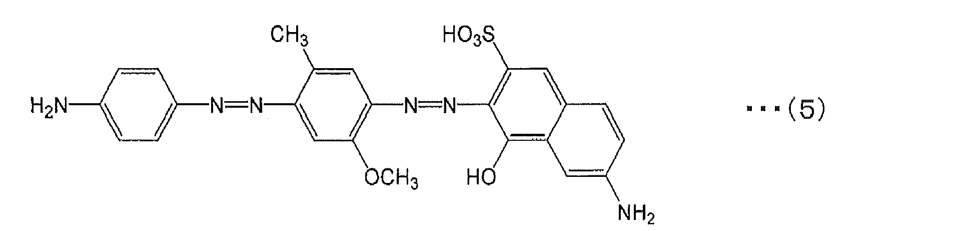

An organosilicon compound was used to perform a surface treatment on the outer surfaces of the glass substrates (first substrate and second substrate) in a liquid crystal cell 203. In Example 4, with respect to the dye represented by the chemical formula (5), 5-carboxy-pentyltriethoxysilane was used as the organosilicon compound so that the surfaces of the glass substrates were covered with carboxyl group terminals.

As in Example 1, the outer surfaces of the glass substrates in a liquid crystal cell 203 were first washed with acetone to remove organic components attached, and an excimer ultraviolet lamp (wavelength 193 nm) was then used to perform light irradiation cleaning. Next, 5-carboxy-pentyltriethoxysilane was coated on the surfaces of the glass substrates, and a heat treatment with hot air at 120°C for 30 minutes was then performed in an oven furnace. Subsequently, after isopropyl alcohol was used to wash the surfaces of the glass substrates, drying by heating at 80°C for 10 minutes was performed in the oven furnace. A series of those steps caused the same chemical reaction between a terminal of the organosilicon compound and the surfaces of the glass substrates as that in Example 1, forming glass treatment layers 202, in which the surfaces of the glass layer were covered with carboxyl group terminals. The glass treatment layers 202 thus formed serve as the glass treatment layers 202 covered with carboxyl group terminals present on both outer surfaces of the liquid crystal cell as in Example 1.

Subsequently, the dye represented by the chemical formula (5) was used to perform a coating step and a heat treatment step as in Example 1, and as a result, dichroic dye-coated films serving as optical anisotropic coated films 201 were formed on both outer surfaces of the liquid crystal cell.

In the liquid crystal display device provided with the optical anisotropic thin film 104 formed as described above, the interfacial bonding between a dye molecule layer as the lower layer of an optical anisotropic coated film 201 where the molecules of dichroic dyes are regularly arranged and the surfaces of liquid crystal cell glass substrates (first substrate and second substrate) is strengthened, and as a result, the bonding acts as an alignment-controlling force, and functions on the whole dichroic dye molecule layer laminated on the dye molecule layer as the lower layer, enabling the strong retention of the alignment of the dichroic dye-coated film serving as the optical anisotropic coated film 201.

### [Embodiment 2]

FIG. 4 is a perspective view for illustrating a schematic configuration of the liquid crystal display device of Embodiment 2 of the present invention. It should be noted that the liquid crystal display device of Embodiment 2 has the same configuration as that of Embodiment 1, except that a protective film 401 is included in the configuration. Thus, the protective film 401 is described in detail in the following description.

As evident from FIG. 4, the liquid crystal display device of Embodiment 2 has a configuration in which the protective film 401 is formed on the upper surface (viewer side) of an optical anisotropic thin film 104 formed on the viewer side of a second substrate 103.

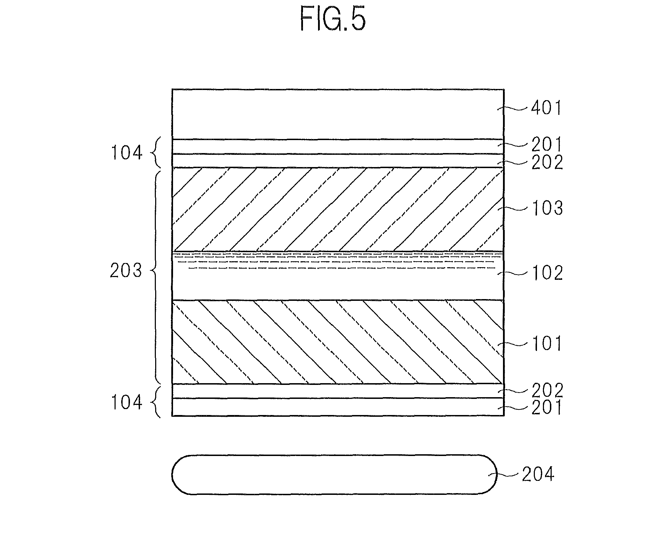

Hereinafter, FIG. 5 illustrates a cross-sectional view taken along the cross-section V-V illustrated in FIG. 4. Hereinafter, the protective film 401 of Embodiment 2 of the present invention is described in detail based on FIG. 5.

As evident from FIG. 5, the liquid crystal display device of Embodiment 2 also has a configuration in which, on the backlight 204 side (lower surface side in the figure) of a first substrate 101, the optical anisotropic thin film 104 is formed, the optical anisotropic thin film including a glass surface treatment layer 202 which is located closer to the first substrate 101 and an optical anisotropic coated film 201, and on the viewer side (upper surface side in the figure) of the second substrate 103, an optical anisotropic thin film 104 is formed, the optical anisotropic thin film including a glass surface treatment layer 202 which is located closer to the first substrate 101 and an optical anisotropic coated film 201.

In addition, the liquid crystal display device of Embodiment 2 has a configuration in which the protective film 401 is formed on the viewer side (upper surface side in the figure), which is the upper surface of the optical anisotropic coated film 201 formed on the second substrate 103. That is, the liquid crystal display device of Embodiment 2 is provided with the protective film 401 for protecting the optical anisotropic coated film 201 from the external environment on the upper surface of the optical anisotropic coated film 201 that is formed on the second substrate 103, the upper surface being the direction of visibility of a display image. It should be noted that the liquid crystal display device of Embodiment 2 has a configuration in which the protective film 401 is formed only on the second substrate 103 side, but the configuration is not limited to the above one. The liquid crystal display device of Embodiment 2 may have a configuration in which the protective film 401 is also formed on the upper surface of the optical anisotropic coated film 201 formed on the first substrate 101.

It is suitable to use, as the protective film 401 of Embodiment 2 of the present invention, an insulating film selected from a silicon nitride film and a silicon nitride oxide film, which are formed under the condition of 60°C or more and 140°C or less by using the known chemical vapor deposition method. This is because those insulating films have sufficient film strength even if the thickness of the films is as thin as several ten nm or more and 1 µm or less, and are suitable for using as the protective film 401. In addition, because the silicon nitride film and the silicon nitride oxide film are formed as thin films, those thin films (protective films) can secure a light use rate of 80% or more, and hence each of those films can serve as a good protective film 401 having visibility enough for liquid crystal display.

Further, it is also suitable to use, as the protective film 401, an oxide transparent conductive film formed at 25°C or more and 140°C or less. Examples of the oxide transparent conductive film include an indium tin oxide film and an indium oxide-zinc oxide film, and it is possible to form a material such as zinc oxide into a film using the known sputtering method. This is because those films also have sufficient film strength even if the thickness of the films is as thin as several ten nm or more and 1 µm or less, and are suitable for using as the protective film 401. In addition, when the oxide transparent conductive film is formed as the protective film 401, the oxide transparent conductive film can play a role of discharging static electricity generated on the surface of the liquid crystal cell 203. Thus, the oxide transparent conductive film can provide a significant effect of contributing to a possible countermeasure for static electricity in the liquid crystal display device.

Moreover, it is also possible to provide a protective plate formed of a transparent substrate in place of the protective film 401. In this case, a transparent substrate made of, for example, an acrylic resin, a polycarbonate resin, or a fluorine resin is used, and an adhesive material is attached around the transparent substrate, which is thereby bonded with a glass substrate in the liquid crystal cell 203, and as a result, the optical anisotropic coated film 201 can be protected.

As described above, the liquid crystal display device of Embodiment 2 of the present invention has a configuration in which the optical anisotropic thin film 104 including the glass surface treatment layer 202 and the optical anisotropic coated film 201 is formed on each of the backlight 204 side of the first substrate 101 and the viewer side of the second substrate 103, and the protective film 401 is formed at least on the viewer side of the optical anisotropic thin film 104 formed on the second substrate 103. Thus, the liquid crystal display device of Embodiment 2 of the present invention can be given, in addition to the same effects as those of Embodiment 1, a significant effect that the influence of the external environment can be prevented.

Hereinafter, Example 5 and Example 6 of the liquid crystal display device of Embodiment 2 of the present invention are described.

### [Example 5]

In Example 5, on the liquid crystal cell 203 obtained in Example 1 on both sides of which the dichroic dye-coated films, that is, the optical anisotropic coated films 201 are formed, a silicon nitride film having a thickness of 80 nm was formed as a protective film 401 under the temperature of 100°C by using a chemical vapor deposition method, for the purpose of protecting the dichroic dye-coated films from the external environment. The silicon nitride film was formed under a temperature which did not influence a liquid crystal material per se. The film has sufficient strength, and hence is suitable for being used as a protective film. In addition, because the silicon nitride film is formed as a thin film, the thin film can secure a light use rate of 80% or more, and hence the thin film serves as a good protective film 401 having visibility enough for liquid crystal display.

The liquid crystal cell 203 thus formed was used to produce a liquid crystal display device.

In the liquid crystal display device of Example 5, the interfacial bonding between a dye molecule layer as the lower layer of an optical anisotropic coated film 201 where the molecules of dichroic dyes are regularly arranged and the surfaces of liquid crystal cell glass substrates is strengthened, and as a result, the bonding acts as an alignment-controlling force, and functions on the whole dichroic dye molecule layer laminated on the dye molecule layer as the lower layer, enabling the strong retention of the alignment of the dichroic dye-coated film serving as the optical anisotropic coated film 201. In addition, forming the protective film 401 on the dichroic dye-coated film can prevent the influence of the external environment.

### [Example 6]

In Example 6, indium oxide-zinc oxide was formed into an oxide transparent conductive film having a thickness of 20 nm, in place of the silicon nitride film in Example 5, under the temperature of 25°C using the known sputtering method. The oxide transparent conductive film was formed under a temperature which did not influence a liquid crystal material per se. The film has sufficient strength, and hence is suitable for being used as a protective film 401. In addition, because the oxide transparent conductive film is formed as a thin film, the thin film can secure a light use rate of 80% or more, and hence the thin film serves as a good protective film 401 having visibility enough for liquid crystal display. In addition, because the oxide transparent conductive film has conductive property, the oxide transparent conductive film can play a role of discharging static electricity generated on the surface of the liquid crystal cell. Thus, the oxide transparent conductive film can contribute to a possible countermeasure for static electricity in the liquid crystal display device.

In the liquid crystal display device thus formed, the interfacial bonding between a dye molecule layer as the lower layer of an optical anisotropic coated film where the molecules of dichroic dyes are regularly arranged and the surfaces of liquid crystal cell glass substrates is strengthened, and as a result, the bonding acts as an alignment-controlling force, and functions on the whole dichroic dye molecule layer laminated on the dye molecule layer as the lower layer, enabling the strong retention of the alignment of the dichroic dye-coated film serving as the optical anisotropic coated film 201.

While there have been described what are at present considered to be certain embodiments of the invention, it will be understood that various modifications may be made thereto, and it is intended that the appended claim cover all such modifications as fall within the true spirit and scope of the invention as defined in the claims. The above embodiments of the invention as well as the appended claims and figures show multiple characterizing features of the invention in specific combinations. The skilled person will in particular easily be able to consider further combinations or sub-combinations of these features in order to adapt the invention as defined in the in the claims to his specific needs.

## Claims

1. A liquid crystal display device, comprising a liquid crystal panel, the liquid crystal panel comprising:
a first substrate (101) on which a plurality of drain lines and a plurality of gate lines are formed, the plurality of gate lines crossing the plurality of drain lines;
a second substrate (103) which is arranged opposite to the first substrate (101) via a liquid crystal (102); and
an optical anisotropic film (104) formed on a side of one of the first substrate (101) and the second substrate (103), the side not being in contact with the liquid crystal (102);
wherein a region surrounded by the plurality of drain lines and the plurality of gate lines serves as a pixel region,
wherein the optical anisotropic film (104) is formed of molecules which chemically bond to one of the first substrate (101) and the second substrate (103) in an aligned state.

2. The liquid crystal display device according to claim 1, wherein the optical anisotropic film (104) has a thickness of 50 nm or more and 700 nm or less.

3. The liquid crystal display device according to claim 1 or 2, wherein the optical anisotropic film (104) comprises a coating material containing a dichroic dye having lyotropic liquid crystallinity.

4. The liquid crystal display device according to one of claims 1 - 3, comprising one of a combination of an amino group and a carboxyl group chemically bonded with each other and a combination of an amino group and a sulfonic acid group chemically bonded with each other between the optical anisotropic film (104) and one of the first substrate (101) and the second substrate (103).

5. The liquid crystal display device according to claim 4, wherein one of the carboxyl group and the sulfonic acid group is present on a side closer to the optical anisotropic film (104) than the amino group.

6. The liquid crystal display device according to claim 4 or 5, wherein the amino group is present on a side closer to the optical anisotropic film (104) than the carboxyl group.

7. The liquid crystal display device according to one of claims 1 - 6, comprising a combination of an amino group and an epoxy group chemically bonded with each other between the optical anisotropic film (104) and one of the first substrate (101) and the second substrate (103),
wherein the amino group is present on a side closer to the optical anisotropic film (104) than the epoxy group.

8. The liquid crystal display device according to one of claims 1 - 7, comprising a transparent protective film on an upper surface of the optical anisotropic film (104).

9. A production method for a liquid crystal display device, the device comprising
a liquid crystal panel, the liquid crystal panel comprising:
a first substrate (101) on which a plurality of drain lines and a plurality of gate lines are formed, the plurality of gate lines crossing the plurality of drain lines;
a second substrate (103) which is arranged opposite to the first substrate (101) via a liquid crystal; and
optical anisotropic film (104)s formed on sides of the first substrate (101) and on a side of the second substrate (103), each of the sides not being in contact with the liquid crystal;
wherein a region surrounded by the plurality of drain lines and the plurality of gate lines serves as a pixel region,
the method comprising:
forming one of the optical anisotropic film (104)s on one of the first substrate (101) and the second substrate (103) in a state where molecules forming the film are aligned; and
chemically bonding one of the optical anisotropic film (104)s formed in the state where the molecules are aligned onto one of the first substrate (101) and the second substrate (103) in the state where the molecules are aligned.

10. The production method for a liquid crystal display device according to claim 9, wherein the optical anisotropic film (104)s comprises a coating material containing a dichroic dye having lyotropic liquid crystallinity.

11. The production method for a liquid crystal display device according to one of claims 9 - 10, the method further comprising chemically bonding an organic silicon compound having a silane group at a terminal on one of the first substrate (101) and the second substrate (103),
wherein one of the optical anisotropic film (104)s is chemically bonded with the organic silicon compound chemically bonded with the substrate, thereby chemically bonding with one of the first substrate (101) and the second substrate (103).

12. The production method for a liquid crystal display device according to one of claims 9 - 11, wherein an amino group on one of the first substrate (101) and the second substrate (103) and one of a carboxyl group and a sulfonic acid group contained in a molecule forming the optical anisotropic film (104)s are bonded with each other, resulting in chemical bonding between one of the first substrate (101) and the second substrate (103) and one of the optical anisotropic film (104)s.

13. The production method for a liquid crystal display device according to one of claims 9 - 12, wherein one of a carboxyl group and an epoxy group on one of the first substrate (101) and the second substrate (103) and an amino group contained in a molecule forming the optical anisotropic film (104)s are bonded with each other, resulting in chemical bonding between one of the first substrate (101) and the second substrate (103) and one of the optical anisotropic film (104).

14. The production method for a liquid crystal display device according to one of claims 9 - 13, further comprising forming a transparent protective filmon at least one of the optical anisotropic film (104)s.
